# FASCICULE DE BREVET EUROPEEN

(11) **EP 1 646 971 B1**
(45) Date de publication et mention de la délivrance du brevet: **15.04.2009**
(21) Numéro de dépôt: 04743915.3
(22) Date de dépôt: 12.07.2004
(51) Int. Cl.: G06K 19/07

(54) **PROCEDE DE GESTION D'UNE MEMOIRE DANS UN OBJET PORTATIF DU TYPE MIXTE**
VERFAHREN ZUR SPEICHERVERWALTUNG IN EINEM TRAGBAREN GEGENSTAND, DER FÜR VERSCHIEDENE VERBINDUNGSARTEN GEEIGNET IST
PROCEDURE FOR THE MEMORY MANAGEMENT IN A PORTABLE CARRIER CAPABLE FOR MIXED-TYPE CONNECTIONS

(30) Priorité: 11.07.2003 EP 03291724
(43) Date de publication de la demande: 19.04.2006
(73) Titulaire: Gemalto SA, 92190 Meudon (FR)
(72) Inventeur: BARBE, Serge, F-78431 Louveciennes (FR)
(74) Mandataire: Cour, Pierre
(86) Numéro de dépôt international: PCT/IB2004/002253
(87) Numéro de publication internationale: WO 2005/006245

(56) Documents cités:
- EP-A- 0 945 828
- DE-A- 19 834 079
- DE-A- 19 855 596
- US-A- 6 038 190

## Description

L'invention est relative à un procédé de gestion d'une mémoire dans un objet portatif du type « mixte », c'est-à-dire dont les moyens de connexion à un appareil hôte associé comprennent à la fois des contacts galvaniques et une antenne de liaison à distance. De façon connue en soi, un tel objet, qui peut notamment prendre la forme d'une carte à puce (telle qu'une carte de crédit, une carte SIM utilisée dans les téléphones portables, etc.), inclut des moyens de traitement de l'information et une mémoire non volatile associée. L'invention s'intéresse au cas où la mémoire non volatile inclut une partie de mémoire présentant les caractéristiques suivantes :
- l'opération d'écriture dans la mémoire exige un effacement préalable de la mémoire, mais elle s'effectue en un temps court ;
- l'opération d'effacement s'effectue en un temps long et réclame une quantité importante d'énergie électrique.

L'invention vise en particulier les mémoires du type "flash".

Le mode « sans contacts » d'un objet portatif tel qu'une carte à puce mixte comporte notamment les contraintes spécifiques suivantes :
- la vitesse de la transaction réalisée entre la carte et son appareil hôte doit être élevée ;
- le niveau d'énergie électrique disponible dans la carte est faible.

Si l'on met en regard ces contraintes et les caractéristiques de la mémoire flash, on constate que cette mémoire est appropriée pour équiper une carte mixte quant à sa vitesse d'écriture, mais pas quant à son effacement.

Le brevet US 6 038 190 dévoile une carte sans contact qui prévoit un mécanisme permettant d'assurer le maintien de l'alimentation d'une carte sans contact en cas d'effacement. La demande de brevet EP 0 945 828 prévoit un système de détection de mode de fonctionnement qui permet d'autoriser ou d'interdire certaines opérations suivant le mode de fonctionnement.

L'invention se fixe comme but de proposer un procédé de gestion de l'effacement d'une mémoire flash, qui permette d'équiper un objet portatif mixte d'une telle mémoire.

Selon l'invention, on décide de n'effectuer, en mode « sans contacts », que des opérations de lecture/écriture de la mémoire, réservant au seul mode « contacts » les opérations d'effacement, sauf éventuellement dans le cas où ces deux modes sont activés simultanément. On a pu constater que cette solution donne satisfaction, le mode « contacts » autorisant effectivement la fourniture de l'énergie électrique importante nécessitée par cet effacement, et pendant un temps important.

Plus précisément, l'invention concerne un procédé de gestion d'une mémoire dans un objet portatif du type « mixte » dont les moyens de connexion à un appareil hôte associé comprennent à la fois des contacts galvaniques et des moyens de connexion à distance définissant ainsi un mode de fonctionnement dit mode « contacts » et un mode de fonctionnement dit mode « sans contacts », ces deux modes de fonctionnement étant éventuellement simultanés, caractérisé en ce qu'il comprend les étapes consistant à :
- lors de toute demande d'effacement d'un bloc mémoire, différer l'effacement et affecter à ce bloc mémoire un attribut de « bloc mémoire à effacer », si l'objet portatif est dans le seul mode « sans contacts » ; puis
- lors d'un futur passage en mode « contacts », déclencher l'effacement de tout ou partie des blocs mémoire possédant l'attribut de « bloc mémoire à effacer ».

Avantageusement, le procédé comprend l'étape consistant, lors de toute demande d'écriture dans un bloc mémoire déterminé, à :
- renoncer à l'écriture de ce bloc mémoire s'il stocke déjà une donnée et si l'objet portatif est dans le seul mode « sans contacts » ;
- rechercher un bloc mémoire vierge et effectuer l'écriture dans celui-ci.
Avantageusement, le procédé comprend l'étape supplémentaire consistant à affecter audit bloc mémoire déterminé un attribut de « bloc mémoire à effacer » 0si l'objet portatif est dans le seul mode « sans contacts ».

D'autres détails et avantages de la présente invention apparaîtront au cours de la description suivante d'un exemple de mise en oeuvre.

Dans cet exemple, l'objet portatif est une carte à puce qui possède une mémoire flash dans laquelle sont définies, pour le mode « sans contacts » seulement, deux tables, une table dite « table active » et une table dite « table d'effacement ». La table active contient l'adresse de tous les blocs mémoire utiles, c'est-à-dire d'une part des blocs mémoire dans lesquels une écriture est possible instantanément, c'est-à-dire sans exiger un effacement préalable (il s'agit donc soit de blocs vierges n'ayant pas encore stocké de données, soit de blocs ayant subi un effacement après avoir stocké des données), d'autre part de blocs mémoire stockant actuellement des données à conserver. Quant à la table d'effacement, elle contient l'adresse de tous les blocs mémoire à effacer, ayant donc déjà subi une écriture.

Lorsqu'une application s'exécute en carte et réclame, lors du mode « sans contacts », l'écriture d'une nouvelle donnée, elle va rechercher un bloc mémoire disponible en écriture : le système d'exploitation de la carte est agencé selon l'invention pour l'orienter vers la table active dans laquelle l'application sélectionnera l'adresse d'un bloc mémoire disponible et le répertoriera comme appartenant à cette application. Puis elle écrira dans ce bloc mémoire la donnée à stocker.

En revanche, en ce qui concerne la mise à jour par l'application, lors du mode « sans contacts », d'une donnée déjà écrite, le système d'exploitation de la carte est agencé selon l'invention pour orienter à nouveau l'application vers la table active, non pas vers le bloc mémoire stockant la valeur actuelle de cette donnée conformément à un fonctionnement classique, mais vers un nouveau bloc mémoire disponible en écriture. Le système d'exploitation de la carte est agencé selon l'invention pour déplacer ensuite l'adresse du bloc mémoire stockant la valeur actuelle de cette donnée, depuis la table active vers la table d'effacement, sauf si l'application a besoin de conserver la valeur actuelle de cette donnée : cette opération permet une réutilisation ultérieure de ce bloc mémoire.

Enfin, le système d'exploitation est agencé pour que, lorsqu'une application réclame, lors du mode « sans contacts », un effacement d'une donnée, il inhibe la fonction d'effacement et remplace cette opération par un déplacement de l'adresse du bloc mémoire stockant la donnée concernée, depuis la table active vers la table d'effacement.

Le système d'exploitation est agencé pour effectuer, lors du prochain passage en mode « contacts », un effacement de tout ou partie des blocs mémoire répertoriés dans la table d'effacement. Cette opération pourra être effectuée à divers moments du mode « contacts », notamment :
- systématiquement, lors de la phase d'initialisation du mode « contacts » ;
- à tout instant où la carte est inactive (par exemple lorsqu'elle attend le résultat d'un traitement en cours dans le terminal coopérant avec la carte).
   La décision d'effacer effectivement ou non un bloc mémoire répertorié dans la table d'effacement sera fonction des circonstances et des besoins.
   La procédure d'effacement comprend typiquement les phases suivantes :

- lire le contenu de la table d'effacement ;
- déclencher l'effacement de tout ou partie des blocs mémoire répertoriés dans la table d'effacement ;
- mettre à jour éventuellement le contenu de la table d'effacement.
A nouveau, la décision de mettre à jour effectivement ou non la table d'effacement sera fonction des circonstances et des besoins.

Lorsqu'une demande d'effacement intervient durant le mode « contacts », elle est exécutée soit de façon habituelle, puisque ce mode ne présente pas de contraintes particulières pour cette opération, soit de la manière utilisée pour le mode « sans contacts ».

L'invention s'applique dans tous les cas où l'objet portatif comporte des moyens de connexion à distance à un appareil hôte associé, c'est-à-dire non seulement dans le cas précité où ces moyens prennent la forme d'une antenne de liaison radio, mais dans tout autre cas imaginable, tel qu'une liaison optique ou magnétique.

L'invention ne fait pas d'hypothèse sur la fréquence d'utilisation en mode « contacts » ou mode « sans contacts » et est applicable dans le cas où l'objet portatif est utilisé dans les deux modes simultanément (cas de la carte SIM sans contacts). Dans un tel cas, le système d'exploitation pourra détecter que de l'énergie est disponible via le mode « contacts » et pourra décider d'un effacement immédiat de la mémoire au sein d'une procédure d'échange de données exécutée en mode « sans contacts ».

## Revendications

1. Procédé de gestion d'une mémoire dans un objet portatif du type « mixte » dont les moyens de connexion à un appareil hôte associé comprennent à la fois des contacts galvaniques et des moyens de connexion à distance définissant ainsi un mode de fonctionnement dit mode « contacts » et un mode de fonctionnement dit mode « sans contacts », ces deux modes de fonctionnement étant éventuellement simultanés, **caractérisé en ce qu'**il comprend les étapes consistant à :
- lors de toute demande d'effacement d'un bloc mémoire, différer l'effacement et affecter à ce bloc mémoire un attribut de « bloc mémoire à effacer », si l'objet portatif est dans le seul mode « sans contacts » ; puis
- lors d'un futur passage en mode « contacts », déclencher l'effacement de tout ou partie des blocs mémoire possédant l'attribut de « bloc mémoire à effacer ».

2. Procédé selon la revendication 1, comprenant l'étape consistant, lors de toute demande d'écriture dans un bloc mémoire déterminé, à :
- renoncer à l'écriture de ce bloc mémoire s'il stocke déjà une donnée et si l'objet portatif est dans le seul mode « sans contacts» ;
- rechercher un bloc mémoire vierge et effectuer l'écriture dans celui-ci.

3. Procédé selon la revendication 2, comprenant l'étape consistant à affecter audit bloc mémoire déterminé un attribut de « bloc mémoire à effacer » si l'objet portatif est dans le seul mode « sans contacts ».

## Claims

1. A method for managing a memory in a portable object of the "hybrid" type with means for connection to a host device comprising both galvanic contacts and remote connection means thus defining a so-called "contact" operating mode and a so-called "contactless" operating mode, the two operating modes being possibly simultaneously, **characterised in that** it comprises stages consisting in:
- during any request for erasing a memory block, deferring the erasing and allocating an attribute of "memory block to erase" to the memory block if the object is in the contactless mode only, then
- during a future switch to the contact mode, triggering the erasing of all or part of the memory blocks having the attribute "memory block to erase".

2. A method according to claim 1, comprising the stage consisting, during any request to write in a given memory block, in:
- aborting writing in the memory block if it already has a piece of data and if the portable object is in the contactless mode alone;
- searching a blank memory block and writing to that block.

3. A method according to claim 2, comprising the stage consisting in giving the said given memory block the attribute of "memory block to erase" if the portable object is in the contactless mode alone.

## Patentansprüche

1. Verfahren für die Verwaltung eines Speichers in einem tragbaren, "gemischten" Objekt, dessen Verbindungsmittel zu einem verknüpften Hostcomputer sowohl galvanische Kontakte als auch Fernverbindungsmittel umfassen, die so einen sogenannten "Kontakt"-Modus und einen Modus "ohne Kontakte" festlegen, wobei diese beiden Modi möglicherweise gleichzeitig erfolgen, was sich **dadurch kennzeichnet, dass** das Verfahren die folgenden Phasen umfasst:
- bei jeder Löschanforderung eines Speicherblocks die Verschiebung dieses Löschvorgangs und die Zuordnung zu diesem Speicherblocks eines Attributs "zu löschender Speicherblock", wenn das tragbare Objekt nur im Modus "ohne Kontakte" ist; anschließend
- bei einem zukünftigen Übergang in den Modus "Kontakte" Auslösen des Löschvorgangs des gesamten oder eines Teils der Speicherblöcke, die das Attribut "zu löschender Speicherblock" besitzen.

2. Verfahren gemäß Anforderung 1, welches die Phase umfasst, die bei jeder Schreibanforderung in einen festgelegten Speicherblock darin besteht:
- auf das Schreiben dieses Speicherblocks zu verzichten, wenn er bereits Daten speichert und wenn das tragbare Objekt nur im Modus "ohne Kontakte" ist;
- einen leeren Speicherblock zu suchen und den Schreibvorgang darin vorzunehmen.

3. Verfahren gemäß Anforderung 2, das die Phase umfasst, die darin besteht, dem besagten festgelegten Speicherblock ein Attribut "zu löschender Speicherblock" zuzuweisen, wenn das tragbare Objekt nur im Modus "ohne Kontakte" ist.
